# EUROPÄISCHE PATENTSCHRIFT

(11) **EP 2 476 974 B1**
(45) Veröffentlichungstag und Bekanntmachung des Hinweises auf die Patenterteilung: **20.11.2019**
(21) Anmeldenummer: 12151150.5
(22) Anmeldetag: 13.01.2012
(51) Int. Cl.: F25B 17/08

(54) **Hohlelement für eine Wärmepumpe und Betriebsverfahren**
Hollow element for a heat pump and operation method
Elément creux pour une pompe à chaleur et procédé de fonctionnement

(30) Priorität: 13.01.2011 DE 102011008521
(43) Veröffentlichungstag der Anmeldung: 18.07.2012
(73) Patentinhaber: MAHLE Behr GmbH & Co. KG, 70469 Stuttgart (DE)
(72) Erfinder: Burk, Roland, 70469 Stuttgart (DE); Zwittig, Eberhard, 73269 Hochdorf (DE); Stripf, Matthias, 76133 Karlsruhe (DE)
(74) Vertreter: Grauel, Andreas

(56) Entgegenhaltungen:
- EP-A2- 2 476 974
- WO-A1-99/37958
- WO-A1-2009/070091
- WO-A2-98/50739
- DE-A1- 2 823 563
- DE-A1- 19 951 372
- US-A1- 2004 089 017

## Beschreibung

Die Erfindung betrifft ein Hohlelement für eine Wärmepumpe nach dem Oberbegriff des Anspruchs 1. Die Erfindung betrifft zudem ein Verfahren zum Betrieb eines erfindungsgemäßen Hohlelements sowie ein Verfahren und eine Vorrichtung zum Befüllen eines erfindungsgemäßen Hohlelements.

WO 2007/068481 A1 beschreibt eine Wärmepumpe, die Stapel aus Hohlelementen aufweist, in denen jeweils eine Adsorptions-Desorptionszone und eine Kondensations-Verdampfungszone angeordnet ist. Die Hohlelemente sind jeweils mit einem Arbeitsmittel befüllt, das zwischen den beiden Bereichen verlagerbar ist. Bezüglich des Aufbaus und des Betriebs einer Wärmepumpe sind die erfindungsgemäßen Hohlelemente mit einer solchen Wärmepumpe bevorzugt kombinierbar. Die Druckschrift WO 2007/068481 A1 wird durch Bezugnahme in die vorliegende Erfindung aufgenommen.

Die DE 199 51 372 A1 offenbart ein Verfahren und eine Vorrichtung zu Kompensation störender Inert- und Fremdgase in Sorptionssystemen. Die WO 2009/070091 A1 offenbart ein Hohlelement nach dem Oberbegriff von Anspruch 1.

Es ist die Aufgabe der Erfindung, ein Hohlelement für eine Wärmepumpe anzugeben, das eine besonders lange Betriebsdauer, insbesondere auch mit einem chemisch nicht absolut stabilen Arbeitsmittel, aufweist.

Diese Aufgabe wird für ein eingangs genanntes Hohlelement erfindungsgemäß mit den kennzeichnenden Merkmalen des Anspruchs 1 gelöst.

Durch ein mindestens erstes erfindungsgemäßes Ventil kann das Arbeitsmittel nicht nur einmalig in das Hohlelement gefüllt werden, sondern auch nachgefüllt werden und/oder teilweise oder vollständig entnommen werden, Hierdurch ist eine Reinigung von Kontaminationen ermöglicht, die zum Beispiel durch langfristige Zersetzung des Arbeitsmittels entstehen können. Zudem können geringe Undichtigkeiten des Hohlelements durch Abblasen oder Absaugen eingedrungener Fremdgase tolerierbar werden, ohne dass ein aufwendiger Austausch des Hohlelements stattfinden muss.

In einer erfindungsgemäßen zweiten Ausführung des Hohlelementes besitzt dieses zumindest zwei Ventile, wobei bevorzugt das erste Ventil als Abblas- bzw. Absaugventil und ein zweites als Füllventil ausgestaltet ist.

Allgemein vorteilhaft, aber nicht notwendig, kann es sich bei dem Arbeitsmittel um einen Alkohol, insbesondere Methanol, handeln. Das Sorptionsmittel kann zum Beispiel Aktivkohle sein.

Bei einer erfindungsgemäßen Gestaltung der Erfindung ist das erste Ventil als Abblasventil ausgebildet, das bei einem definierten Differenzdruck von dem Hohlraum nach außen öffnet. In erfindungsgemäßer Ausgestaltung schließt das Abblasventil dabei selbsttätig, während in dem Hohlraum ein höherer Druck als außerhalb des Ventils anliegt. Hierdurch kann insgesamt eine gewisse Menge des Arbeitsmittels bzw. in dem Hohlraum vorhandener Gase abgeblasen oder mit einer Saugpumpe abgesaugt werden. Dies ermöglicht die Reinigung des Arbeitsmittels bzw. die Beseitigung von Kontaminationen und Zersetzungsprodukten. Ein solcher Schritt kann zum Beispiel durch eine gezielte Erhitzung von Teilen des Hohlelements bzw. gezieltes Unterlassen der Wärmeabfuhr erreicht werden, um außerhalb eines Normalbetriebs, aber ohne wesentliche Montagemaßnahmen eine Reinigung des Hohlelements durchzuführen.

Vorteilhaft ist dieses erste Ventil in dem zweiten Bereich, insbesondere in einem Wand-, Kanten- oder Eckbereich des Gehäuses, jenseits des ersten Bereiches angeordnet. Diese Position unterstützt einen effektiven Ausstoß von Verunreinigungen, zum Beispiel bei Betrieb als Abblas- oder Absaugventil.

Allgemein vorteilhaft umfasst in der ersten Ausführungsvariante das in diesem Falle einzige Ventil ein Betätigungsglied, mittels dessen es definiert geöffnet und geschlossen werden kann. Hierdurch ist eine kontrollierte Zuführung und Abführung von Arbeitsmittel ermöglicht. Besonders bevorzugt liegt dabei ein Ventil vor, bei dem zugleich bzw. integriert eine automatische Öffnung durch einen Differenzdruck vorgesehen ist (Abblasventil), sowie auch ein Betätigungsglied zur definierten Öffnung und Schließung.

In der zweiten Ausführungsform der Erfindung sind die beiden Funktionen Abblasen/Absaugen und Füllen/Nachfüllen vorteilhaft auf zwei Ventile aufgeteilt, wobei die Abblas-/Absaug-Funktion vom ersten Ventil realisiert wird, das in diesem Falle kein mechanisches Betätigungselement zur Zwangsöffnung benötigt.

Das zweite Ventil dient bevorzugt dem Füllen bzw. Nachfüllen des Hohlelementes mit Arbeitsmittel. Es ist vorzugsweise ebenfalls als federbelastetes Rückschlagventil, jedoch mit einer Öffnungsrichtung von außen nach innen ausgeführt. Der zum Öffnen erforderliche Differenzdruck liegt dabei jedoch deutlich über einem bar, sodass es auch beim Evakuieren des Hohlelementes sicher geschlossen bleibt. Zum Füllen oder Nachfüllen des Hohlelementes ist daher vorteilhaft ein deutlich größerer Druck als 1 bar erforderlich, um dieses zu öffnen. Der Anbringungsort dieses zweiten Ventils am Hohlelement kann bevorzugt frei gewählt werden, da das eingebrachte Arbeitsmittel sich im Betrieb nach wenigen Zyklen an den jeweils gekühlten Stellen niederschlägt.

Die Erfindung umfasst zudem zwei je nach Ausführungsform des Hohlelementes unterschiedliche Vorrichtungen zur Befüllung eines erfindungsgemäßen Hohlelements.

Die erste Variante umfasst ein Gefäß zur Aufnahme von Arbeitsmittel und ein Verbindungsglied zur lösbaren, gasdichten Verbindung des Gefäßes mit dem Ventil. Durch eine solche Vorrichtung kann auf einfache Weise Arbeitsmittel nachgefüllt werden oder auch eine erste, ursprüngliche Befüllung mit Arbeitsmittel erfolgen. Die Vorrichtung kann insbesondere so weitergebildet sein, zum Beispiel durch Kombination mit einer Vakuumpumpe, dass sowohl eine Entnahme als auch ein Befüllen ermöglicht ist. Insbesondere kann eine teilweise oder vollständige Entnahme von Arbeitsmittel in einem Arbeitsgang unmittelbar vor einem Befüllen mit (neuem) Arbeitsmittel erfolgen.

Die zweite Variante umfasst ebenfalls ein Gefäß zur Aufnahme von Arbeitsmittel und ein Verbindungsglied zur lösbaren, gasdichten Verbindung des Gefäßes mit dem Ventil. Dieses ist jedoch z. B. mit einem Kolben oder einem anderen Funktionselement zur Erhöhung des Arbeitsmitteldruckes ausgeführt, wodurch flüssiges Arbeitsmittel mit Überdruck durch das Füllventil gepresst werden kann.

In weiterer Ausgestaltung ist vorgesehen, dass zumindest eines der beiden Ventile während der absehbaren Nichtgebrauchsphase mit einer gasdicht schließenden Verschlusskappe ausgestattet ist, um die Hohlelemente zusätzlich vor eindringender Luft zu schützen.

Die Erfindung umfasst zudem mindestens je ein, den beiden Ausführungsformen zugeordnetes Verfahren, zum Betrieb eines erfindungsgemäßen Hohlelements nach einem der Ansprüche 1 bis 5.

Das erste Verfahren für die erste Hohlelement-Ausführung umfasst die Schritte:
- Erhitzen zumindest eines Teils des Hohlelements, insbesondere des ersten Bereichs, um einen Anstieg eines Drucks des Arbeitsmittels über einen Außendruck zu erzielen;
- Öffnen des Ventils, insbesondere durch den angestiegenen Druck des Arbeitsmittels;
- Abblasen einer insbesondere kontrollierten Menge des Arbeitsmittels durch das geöffnete Ventil.

Dieses Verfahren eignet sich für ein automatisch initiiertes Abblasen von kontaminiertem Arbeitsmittel ohne zwingend erforderliches Zutun eines Service-Technikers.

Das folgende modifizierte Verfahren erfordert hingegen den Anschluss einer Vakuum- oder Saugpumpe durch einen Servicetechniker der vorschlagsgemäß folgende Verfahrensschritte durchführt:
- Anschluss einer Saug- oder Vakuumpumpe an das Abblasventil.
- Einleiten eines Desorptions-/Kondensationsprozesses durch Erhitzen des ersten Bereichs bis Kondensationswärme im zweiten Bereich anfällt.
- Warten bis eine definierte Kondensationswärme im zweiten Bereich angefallen ist, die kleiner oder gleich der zyklierten Arbeitsmittelmenge multipliziert mit der Verdampfungsenthalpie ist.
- Absenkung des äußeren Drucks mittels Saug- oder Vakuumpumpe bis Abblasventil öffnet.
- Absaugen eines definierten Volumens.

Durch dieses Abblasen bzw. Absaugen des am Absaugort vorliegenden Gasgemisches können mit dem Arbeitsmittelstrom Kontaminationen oder Zersetzungsprodukte des Arbeitsmittels entfernt werden. Solche Verunreinigungen neigen dazu, das Sorptionsmittel und/oder das Aufnahmemittel teilweise zu blockieren, so dass der Arbeitsmitteldampf mit verringerter Effektivität adsorbiert oder kondensiert werden kann und die Leistung des Hohlelements entsprechend absinkt. Das erfindungsgemäße Verfahren ermöglicht also insbesondere eine Regeneration des Hohlelements mit einfachen Mitteln. Ein solcher Vorgang des Abblasens oder Absaugens von Arbeitsmittel kann in regelmäßigen Abständen und/oder zu bestimmten Betriebsbedingungen erfolgen, wie insbesondere vor jedem Kaltstart der Wärmepumpe oder bei einem Wartungstermin.

Bei der ersten Verfahrensvariante erfolgt das Erhitzen des Hohlelements bevorzugt mittels eines gegenüber einem Normalbetrieb veränderten Betriebsmodus. Dies kann zum Beispiel durch ausreichend lange Beströmung des ersten Bereichs mit einem wärmetragenden Fluid von einer Heizquelle erfolgen. Besonders bevorzugt unterbleibt dabei eine Wärmeabfuhr aus dem zweiten Bereich, wie sie im Normalbetrieb der Wärmepumpe zumindest nach gewisser zeitlicher Verzögerung eingeleitet würde, oder die Wärmeabfuhr wird durch Absenken des Wärmeträger-Volumenstroms mittels der Umwälzpumpe stark reduziert.

Bei einer besonders bevorzugten Detailgestaltung einer der Verfahrensvarianten wird das Abblas- oder Absaugverfahren in zeitlichen Abständen mehrfach und ohne eine zwischenzeitige Befüllung des Hohlelements durchgeführt. Insbesondere durch eine ursprünglich ausreichende Befüllung oder kontrollierte Überfüllung ist es denkbar, dass mehrere Dutzend Abbias- oder Absaugvorgänge durchgeführt werden können, bevor die Arbeitsmittelmenge in dem Hohlelement unter eine für den Betrieb der Wärmepumpe kritische Menge fällt.

Die Erfindung umfasst zudem ein Verfahren zur Füllung oder Nachfüllung eines erfindungsgemäßen Hohlelements nach einem der Ansprüche 1 bis 5, umfassend die Schritte:
- Verbinden einer Vorrichtung nach Anspruch 6 oder 7 mit dem Hohlelement;
- Öffnen des Ventils;
- Zuführen einer definierten Menge des Arbeitsmittels durch das Ventil in das Hohlelement;
- Schließen des Ventils.

Auf diese Weise kann Arbeitsmittel einfach in das Hohlelement eingebracht werden, zum Beispiel zum Zweck einer ursprünglichen Befüllung oder einer Nachbefüllung.

In vorteilhafter Weiterbildung des Verfahrens wird vor dem Zuführen des Arbeitsmittels eine definierte Menge an Arbeitsmittel aus dem Hohlelement abgesaugt, insbesondere mittels einer Saugpumpe, z. B. entsprechend oben beschriebener Verfahrensvariante. Hierdurch kann zunächst eine Reinigung erfolgen, wobei mit dem abgesaugten Arbeitsmittelstrom Verunreinigungen ausgespült werden. Je nach Anforderungen kann dabei eine definierte Erhitzung des ersten Bereichs des Hohlelementes vorgesehen sein, um nicht kondensierbare Kontaminationen zum zweiten Bereich zu spülen und damit im Bereich des Abblasventils anzureichern. Bei einer bevorzugten Detailgestaltung wird dabei die nachfolgend zugeführte, definierte Menge an Arbeitsmittel in Abhängigkeit von einem an der Pumpe anliegendem Saugdruck und einer Temperatur des Hohlelements bestimmt.

Durch den bei bekannten Temperaturen im Hohlelement anliegenden Druck kann aufgrund der bekannten Eigenschaften des Sorptionsmittels in einem stationären Zustand recht genau auf die vorhandene Arbeitsmittelmenge geschlossen werden, so dass eine vorstehend genannte Nachbefüllung erfolgen kann, ohne dass das Hohlelement zuvor entleert werden muss. Dies kann insbesondere bei teuren oder weniger umweltverträglichen Arbeitsmitteln sinnvoll sein. Je nach Anforderungen kann die Nachbefüllung aber auch so erfolgen, dass zunächst das gesamte alte Arbeitsmittel aus dem Hohlelement abgesaugt wird, gegebenenfalls unter Erhitzung. Hiermit ist auch eine optimale Entfernung von Kontaminationen verbunden.

Allgemein vorteilhaft umfasst die Befüllung mit Arbeitsmittel den Schritt:
- Zuführen einer so bemessenen Menge von Arbeitsmittel, dass das Sorptionsmittel mit Arbeitsmittel gesättigt ist und das Aufnahmemittel zumindest teilweise mit Arbeitsmittel gesättigt ist. Hierdurch erfolgt eine kontrollierte Überfüllung des Hohlelements, wodurch ein oder mehrere Abblasvorgänge zur Reinigung von Kontaminationen ermöglicht werden, ohne die Leistungsfähigkeit bezüglich der Arbeitsmittelmenge zu verringern. Bevorzugt, aber nicht notwendig wird bei einer definierten Überfüllung vermieden, dass überschüssiges Arbeitsmittel in flüssiger Phase in einem Sumpf des Hohlelements anliegt. Das überschüssige Arbeitsmittel wird vielmehr bevorzugt von dem (kapillarischen) Aufnahmemittel gehalten.

Bei einer allgemein bevorzugten Weiterbildung der Erfindung umfasst das Verfahren den vorausgehenden Schritt:
- Erkennen eines Mangelzustands des Hohlelements, insbesondere aufgrund eines Anstiegs einer Wärmeträger-Austrittstemperatur während einer Verdampfungsphase des Hohlelements. Hierdurch kann durch übliche überwachte Parameter im Normalbetrieb oder auch in einem besonderen Testzyklus der Wärmepumpe ein Nachlassen der Leistung des Hohlelements automatisch erkannt werden. Daraufhin kann das erfindungsgemäße Befüllungsverfahren eingeleitet werden, um das Hohlelement mit ausreichender Menge an Arbeitsmittel zu versorgen. Die Überwachung der Wärmeträger-Austrittstemperatur während der Verdampfungsphase ist besonders zielführend, da ein Mangel an Arbeitsmittel unmittelbar zu einer unzureichenden Temperaturabsenkung in der Verdampfungsphase führt.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine schematische Darstellung eines erfindungsgemäßen Hohlelements.
- Fig. 2: zeigt das Hohlelement aus Fig. 1 mit einer erfindungsgemäßen Vorrichtung zur Befüllung.

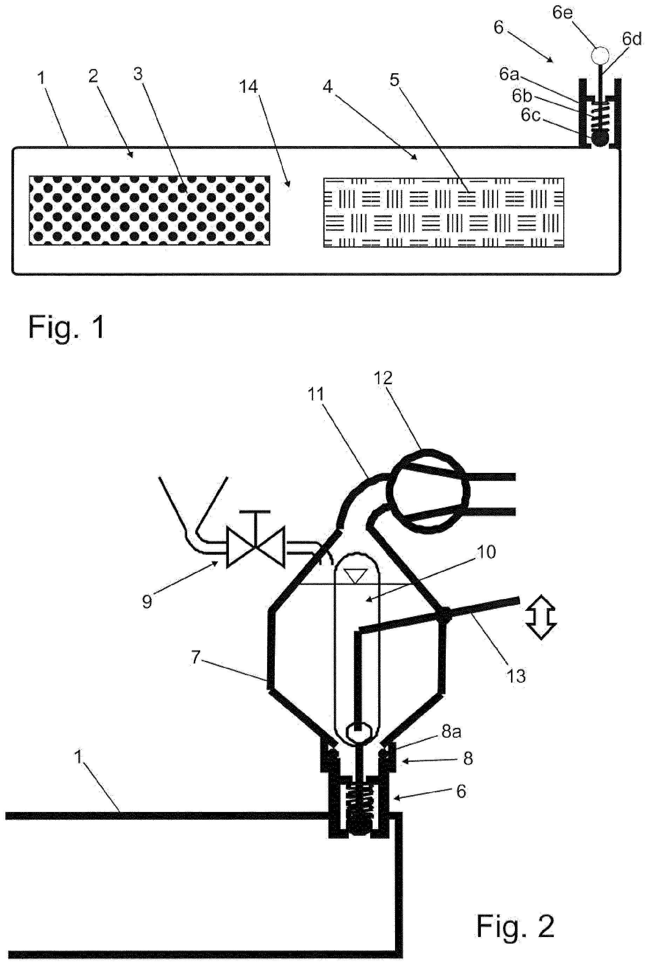

Das in Fig. 1 gezeigte Hohlelement umfasst ein gegen den Außenraum hermetisch abgrenzendes Gehäuse 1, das einen länglichen Hohlraum einschließt. In einem ersten Bereich 2 des Hohlraums ist ein Sorptionsmittel 3, vorliegend Aktivkohle, angeordnet. In einem zweiten Bereich 4 des Hohlraums ist ein kapillarisch wirkendes Aufnahmemittel 5 angeordnet. Die kapillarischen Strukturen können auf verschiedene bekannte Weise ausgeformt sein und dienen der Kondensation und Aufnahme bzw. kapillarischen Halterung eines in dem Hohlraum vorgesehenen Arbeitsmittels in flüssiger Phase. Das Arbeitsmittel ist vorliegend Methanol. Zwischen den Bereichen 2, 4 befindet sich ein leerer Bereich 14, der eine thermische Trennzone ausbildet.

Im Betrieb der (nicht näher gezeigten) Wärmepumpe werden die Bereiche 2, 4 alternierend von außen durch ein oder mehrere Wärmeträgerfluide erhitzt oder gekühlt, so dass das Arbeitsmittel je nach Randbedingungen an dem Sorptionsmittel 3 adsorbiert und desorbiert und an dem Aufnahmemittel 5 kondensiert und verdampft.

Die Wärmepumpe umfasst jeweils eine Mehrzahl der dargestellten, separaten Hohlelemente.

Das Hohlelement hat ein eingebautes Ventil, vorliegend Rückschlagventil bzw. Abblasventil 6 zur Befüllung mit Arbeitsmittel und zur kontrollierten Entleerung, insbesondere in Verbindung mit dem Abblasen von Verunreinigungen des Arbeitsmittels. Das Ventil kann mit dem Hohlelement in nicht weiter ausgeführter Form auch über eine Verbindungsleitung verbunden sein. Falls eine direkte Anbindung und Ausrichtung des Ventils nach oben aus Platzgründen ungünstig ist, zum Beispiel da die Hohlelemente später aufeinander gestapelt werden sollen, kann diese Lösung bevorzugt sein. Möglich wäre auch ein kurzes um 90° gebogenes Rohrstück, das an der rechten senkrechten Gehäusewandfläche (Fig. 1) angebracht ist. Das Ventil 6 hat ein Gehäuse 6a, in dem ein mit einer Feder 6b belasteter Schieber 6c angeordnet ist. Die Feder 6b wirkt gegen den Arbeitsmitteldruck auf den Schieber 6c. Ferner ist an dem Schieber 6c ein Betätigungsglied 6d in Form einer Stange mit einem Koppelglied 6e angeordnet, so dass eine mechanische oder kraftschlüssige Einwirkung auf das Betätigungsglied 6d, zu einem Öffnen des Schiebers 6c gegen die Feder 6b oder auch zu einem Schließen gegen den Arbeitsmitteidruck führen kann. Ein Kraftschluss kann zum Beispiel über ein magnetisches Element erfolgen.

Die in Fig. 2 gezeigte Vorrichtung zur Befüllung des Hohlelements umfasst ein Gefäß 7, das über eine Kupplung 8 mit einer Dichtung 8a gasdicht an das Ventil 6 anschließbar ist. Über einen absperrbaren Zufluss 9 kann eine definierte Menge von Arbeitsmittel in flüssiger Phase in das Gefäß eingebracht werden, Hierzu hat das Gefäß 7 eine Füllstandsanzeige 10.

Das gasdicht anschließbare Gefäß hat zudem eine Abführung 11, die mit einer Vakuumpumpe bzw. Saugpumpe 12 verbunden ist. Ferner ist in dem Gefäß eine Mechanik 13 vorgesehen, die mit dem Koppelglied 6e des Ventils 6 lösbar verbunden ist. Durch Bewegung eines nach außen geführten Hebels der Mechanik 13 (schematisch in Fig. 2 durch einen Doppelpfeil dargestellt) kann das Ventil 6 bei aufgesetzter Befüllungsvorrichtung von außen geöffnet und geschlossen werden.

Die Füllstandsanzeige 10 ist ein Schauglas oder Niveau-Sensor als Indikator für die eingefüllte oder einzufüllende Arbeitsmittelmenge. Im Falle einer automatischen Bemessung der einzufüllenden Flüssigkeit kann ein Füllstands-Sensorsystem zusammen mit einer elektronischen Regelung und einer automatisierten Betätigungsvorrichtung zur Zwangsöffnung des Ventils vorgesehen sein.

An die Vakuumpumpe kann sich optional eine Aufnahmevorrichtung für abgesaugte Arbeitsmitteldämpfe (z. B. Aktivkohle-Adsorber) anschließen oder diese werden anderweitig, z. B. durch Verbrennung entsorgt.

Der Anschlussadapter (Kupplung 8) der Vorrichtung ist geometrisch und in seiner Einsatzlage so gestaltet, dass die Gesamtanordnung aus Füllvorrichtung und zu füllendem Hohlelement im angeschlossenen Zustand sicherstellt, dass die einzusaugende Flüssigkeit des gefüllten Vorratsgefäßes 7 direkt am Ventilsitz ansteht und keine Gasanteile (Blasen und dgl.) zwischen Ventilsitz und Vorratsgefäß hängen bleiben. Eventuell doch vorhandene Gasanteile können mittels geeigneter Maßnahmen (Klopfen, Rütteln, Ultraschal, Absaugen mit der Vakuumpumpe) entfernt werden. Ziel ist es also, dass bei einer Zwangsöffnung des Ventils 6 über die Betätigungsvorrichtung 6d, 13 nur Arbeitsmittelflüssigkeit ohne Gasanteile in das unter Unterdruck stehende Hohlelement einströmen kann.

Besonders bevorzugt können Hilfsmittel vorgesehen sein, die ein automatisches Schließen des Ventils sicherstellen, bevor das flüssige Arbeitsmittel komplett eingesaugt wurde. Diese Hilfsmittel können aus sensorischen, elektronischen und aktuatorischen Teilsystemen bestehen. Auf diese Weise kann die eingesaugte Arbeitsmittelmenge gemessen, begrenzt und/oder dosiert werden.

Die Erfindung funktioniert wie folgt:
Das Ventil 6 ist so ausgebildet, dass es bei geringer, aber definierter Druckdifferenz selbsttätig öffnet, diesen Überdruck abbaut und selbsttätig wieder schließt, bevor die Druckdifferenz vollständig abgebaut ist. Solche Ventile werden auch als Überdruck- oder Abblas-Ventile bezeichnet.

Das Ventil 6 ist an der Wand 1 des Hohlelementes, vorzugsweise (aber nicht zwingend) im Bereich der Phasenwechselzone und besonders bevorzugt in einem Wand-, Kanten- oder Eckbereich jenseits der Sorptionszone angeordnet. Die Einbaulage ist so ausgerichtet, dass das Ventil 6 ohne externe Betätigung nur bei einer positiven Druckdifferenz zwischen innen und außen öffnet und einen Volumenstrom nach außen zulässt. Bei Druckgleichgewicht oder einem Druckgradienten von außen nach innen ist es jedenfalls gasdicht geschlossen.

Befüllung des Hohlelements:
Das Hohlelement wird mit einem klassischen oder einem weiter unten vorgestellten neuen Verfahren mit einer höheren als für den Betrieb eigentlich erforderlichen Arbeitsmittelmenge befüllt. Dazu ist die Phasenwechselzone 5 des Hohlelements 6 so ausgelegt, dass sie eine Arbeitsmittelmasse aufnehmen kann, die größer ist als die maximal von der Sorptionszone 3 aufnehmbare Arbeitsmittelmasse. Damit ist gewährleistet, dass im voll adsorbierten Zustand der Adsorberstruktur 3 unter Umgebungstemperatur noch flüssiges Arbeitsmittel in der Kapillarstruktur der Phasenwechselzone 5 vorliegt.

Reinigung des Hohlelements / Abblasen von Arbeitsmittel:
Zur bedarfsweisen Entfernung schädlicher Fremdgasanteile oder vorzugsweise bei jedem Kaltstart der Adsorptionswärmepumpe werden zunächst die Hohlelemente mit dem heißen Fluid eines Heizkreislaufs der Wärmepumpe mittels des Fluidmanagementsystems nacheinander auf Desorptions-Endtemperatur, beispielsweise 120°C, erhitzt und für eine definierte Zeit dort gehalten. Eine Umwälzpumpe zur Abfuhr der Kondensationswärme aus dem zweiten Bereich 4 bleibt in dieser Zeit abgeschaltet oder in der Drehzahl stark reduziert.

Dadurch wird zunächst bewirkt, dass der Arbeitsmitteldruck durch Desorption von Arbeitsmittel im Hohlelement ansteigt und durch Kondensation in der Kapillarstruktur 5 kondensiert. Da die dabei entstehende Kondensationswärme nicht oder unzureichend abgeführt wird, erwärmt sich die Kapillarstruktur 5 immer weiter, wodurch der Kondensationsdruck schließlich den äußeren Luftdruck überschreitet. Bei der Überschreitung des im Abblasventil 6 eingestellten Abblas-Überdruckes öffnet das Ventil 6 und bläst einen Teil des Arbeitsmitteldampfes zusammen mit den darin angereicherten Fremdgasen bzw. Verunreinigungen an die Umgebung ab. Die Haltedauer der Sorptionszone 5 auf der Desorptions-Endtemperatur und/oder die gestoppte oder reduzierte Umwälzung des Fluids zur Abfuhr der Kondensationswärme ist bzw. sind vorzugsweise so dimensioniert, dass die abgeblasene Gasmenge die im Hohlelement befindliche Gasmasse nicht wesentlich übersteigt. Damit ist sichergestellt, dass bei diesem Verfahren nicht zu viel Arbeitsmittel aus dem Hohlelement entweicht.

Bei der modifizierten zweiten Verfahrensvariante mit Saug- oder Vakuumpumpe muss der Druckanstieg auf Umgebungsdruck nicht abgewartet oder provoziert werden. Stattdessen wird die Öffnungs-Druckdifferenz durch Einschalten der Absaugpumpe erreicht und so der Absaugprozess eingeleitet.

Die bevorzugte, aber nicht notwendige Anordnung des Ventils 6 in einem der Sorptionszone abgewandten Bereich der Phasenwechselzone 4 bewirkt, das die Arbeitsmitteldämpfe alle im Bereich der Kapillarstruktur 5 angereicherten Fremdgase in Richtung Abblasventil 6 gespült werden und sich dort anreichern. Dort ist dann also der Fremdgas-Partialdruck am größten und der Arbeitsmittelverlust am geringsten.

Befüllung / Nachbefüllung von Arbeitsmittel:
Durch mehrfaches Abblasen von Fremdgasen und dem damit verbundenen Arbeitsmittelverlust wird irgendwann die minimale Arbeitsmittel-Füllmenge des Hohlelementes unterschritten, so dass eine Nachbefüllung erforderlich ist. Dieser Arbeitsmittel-Mangelzustand ist anhand eines Anstiegs der Austrittstemperatur des während einer Verdampfungsphase der Wärmepumpe umgewälzten Kälteträger-Fluids erkennbar und kann ein Signal für einen Servicebedarf auslösen. Vorzugsweise erfolgt das dann erforderliche Befüll-Verfahren dann im Rahmen einer Systemwartung und erfordert dazu die zusätzliche Vorrichtung gemäß Fig. 2 oder eine modifzierte Vorrichtung mit einem Füllbehälter, der unter einen Überdruck gesetzt werden kann, je nachdem welches Ventilkonzept eingesetzt wird.

Bei der Variante mit einem kombinierten Abblas-/Füllventil verläuft das damit durchgeführte Verfahren wie folgt:
1. Bringen des Hohlelementes in eine Lage, bei der das Füllventil vorzugsweise nach oben zeigt (sofern das Ventil im eingebauten Zustand noch nicht in dieser Einbaulage angebracht ist, was vorzugsweise der Fall sein sollte).
2. Gasdichter Anschluss der Kupplung an dem Ventil 6 des Hohlelements.
3. Absaugung einer definierten Gasmenge aus dem angeschlossenen Hohlelement. Es kann sich um eine begrenzte Gasmenge handeln oder auch um eine vollständige Entleerung des Hohlelements.
4. Anschluss der Mechanik 13 an das Betätigungsglied 6d des Ventils 6 zum bedarfsweisen Öffnen des Ventils.
5. Befüllung des Vorratsgefäßes 7 aus einem insbesondere gasdichten Arbeitsmittel-Gebinde über den Zufluss 9.
6. Initiierung einer zeitlich begrenzten Zwangsöffnung des Ventils 6 zur Einsaugung einer definierten Menge von Arbeitsmittel-Flüssigkeit.
7. Lösung der Mechanik 13 von dem Ventil 6.
8. Entfernung der Vorrichtung zum Befüllen des Hohlelements.

Sinn und Zweck der einzelnen Teilschritte sind wie folgt:

### Schritte 1 u. 2:

Vorraussetzung des vorgeschlagenen Verfahrens ist die weitestgehend fremdgasfreie Befüllung eines bereits teilgefüllten Hohlelements, ohne das gesamte Hohlelement vorher vollständig absaugen und evakuieren zu müssen. Dies gelingt, wenn die Vorrichtung so ausgeführt ist, dass sich keine größeren Fremdgasanteile (Luftblasen) zwischen Ventilsitz und einzufüllender Flüssigkeit befinden oder durch eine undichte Verbindung zwischen Hohlelement und Füllvorrichtung eindringen können bzw. beim Füllvorgang eingesaugt werden könnten.

### Schritt 3:

Mit diesem Schritt wird zunächst ein Teil des im Hohlelement vorliegenden Arbeitsmittels abgesaugt, um evtl. noch vorhandene Fremdgasanteile aus dem Hohlelement zu entfernen. Bei bekannter Pumpleistung und gemessenem Saugdruck kann die abgesaugte Menge über die Laufzeit der Pumpe bestimmt werden. Vorzugsweise sollte mindestens die Menge abgesaugt werden, die bei der im Hohlelement vorliegenden Dampfdichte den gesamten Dampfraum des Hohlelementes ausfüllt, um möglichst alle Fremdgasanteile zu entfernen. Da der Öffnungs-Differenzdruck des Ventils bekannt ist, kann aus dem Pumpen-Saugdruck unter Berücksichtigung der Temperaturen des Hohlelementes auf die im Hohlelement befindliche Arbeitsmittel-Restmenge geschlossen werden und daraus die nachzufüllende Arbeitsmittelmenge abgeleitet werden.

### Schritt 4:

Zur Nachfüllung des Hohlelementes mit flüssigem Arbeitsmittel wird das Ventil entgegen der vorliegenden Druckdifferenz von außen geöffnet, um Arbeitsmittelflüssigkeit einströmen zu lassen.

### Schritt 5:

Über die absperrbare Füllleitung kann nun Arbeitsmittel hoher Reinheit in das Vorratsgefäß mit der Füllstandsüberwachung eingebracht werden.

### Schritt 6:

Manuell oder elektronisch kann nun die Vorrichtung der Ventil-Zwangsöffnung aktiviert werden, um eine definierte Menge Arbeitsmittel in das Hohlelement strömen zu lassen. Die Aktivierungsdauer wird beendet, bevor die im Vorratsgefäß vorliegende Arbeitsmittelmenge vollkommen eingeströmt ist, um zu verhindern, dass das Hohlelement Luft ansaugt. Erforderlichenfalls müssen die Schritte 5 und 6 mehrfach nacheinander wiederholt werden.

### Schritte 7 und 8:

Nachdem das Hohlelement mit einer ausreichenden Menge Arbeitsmittel befüllt wurde, kann die Vorrichtung demontiert werden. Vorzugsweise ist das Hohlelement nun mit einer Überschussmenge an Arbeitsmittel befüllt, sodass entsprechend dem vorstehend beschriebenen Verfahren mehrfach Fremdgase abgeblasen werden können, bevor das Hohlelement wegen Arbeitsmittelmangels in seiner Leistungsfähigkeit beeinträchtigt und ein erneuter Servicebedarf angezeigt wird.

Bei der Variante mit getrennten Ventilen für den Abblas- bzw. Absaugprozess und den Füll-/Nachfüllprozess verläuft das Füll-Verfahren etwas einfacher wie folgt:
1. Entfernung einer optional vorhandenen Verschlusskappe.
2. Bringen des Hohlelementes in eine Lage, bei der das Füllventil vorzugsweise nach oben zeigt (sofern das Ventil im eingebauten Zustand noch nicht in dieser Einbaulage angebracht ist, was vorzugsweise der Fall sein sollte).
3. Anschluss des Nachfüllbehälters an das Füllventil des Hohlelements.
4. Befüllung des Nachfüllbehälters aus einem insbesondere gasdichten Arbeitsmittel-Gebinde.
5. Druckbeaufschlagung des Nachfüllbehälters zur Überwindung des Öffnungsdruckes des Füllventils.
6. Einpressen der gewünschten Menge an flüssigem Arbeitsmittel.
7. Entfernung der Vorrichtung zum Befüllen des Hohlelements.
8. Gasdichter Verschluss des Füllventils mittels Verschlusskappe oder ähnlichem.

Der Hauptvorteil der Erfindung liegt in der deutlich entschärften Dichtheitsanforderung der Hohlelemente einer Adsorptionswärmepumpe gegenüber vorbekannten Elementen, die als einmalig befüllbare Elemente ausgelegt sind. Mit der Vorrichtung und dem damit durchführbaren Verfahren kommt auch die Verwendung nur begrenzt stabiler Arbeitsmittel, insbesondere die Verwendung von Alkoholen (Methanol, Ethanol) in Frage, die einer geringen, aber nicht vernachlässigbaren Zersetzungskinetik ausgesetzt sind. Diese kann insbesondere durch thermochemische Effekte an FestkörperOberflächen beschleunigt sein.

Die bei dem Verfahren verlorene Arbeitsmittelmenge kann von Zeit zu Zeit durch eine Vor-Ort-Wartung mit der beschriebenen Vorrichtung und dem damit durchführbaren Nachbefüllungsverfahren ohne großen Zeit- und Kostenaufwand durchgeführt werden. Dadurch kann die ursprüngliche Leistungsfähigkeit der Hohlelemente wieder hergestellt werden.

## Patentansprüche

1. Hohlelement für eine Wärmepumpe, umfassend einen geschlossenen Hohlraum mit einem ersten Bereich (2), einem zweiten Bereich (4) und einer definierten Menge eines zwischen den Bereichen (2, 4) verlagerbaren Arbeitsmittels, wobei in dem ersten Bereich (2) ein Sorptionsmittel (3) zur Adsorption und Desorption des Arbeitsmittels angeordnet ist, und wobei in dem zweiten Bereich (4) ein kapillarisches Aufnahmemittel (5) zur Kondensation und Verdampfung des Arbeitsmittels angeordnet ist, wobei an einem Gehäuse (1) des Hohlelements zumindest ein erstes Ventil (6) vorgesehen ist, mittels dessen Arbeitsmittel wiederholt aus dem Hohlraum entnehmbar und/oder in diesen einbringbar ist, **dadurch gekennzeichnet, dass** das erste Ventil (6) als Abblasventil ausgebildet ist, das bei einem definierten Differenzdruck von dem Hohlraum nach außen öffnet und wobei das erste Ventil (6) als Abblasventil selbsttätig schließt, während in dem Hohlraum ein höherer Druck als außerhalb des ersten Ventils (6) anliegt.

2. Hohlelement nach Anspruch 1, **dadurch gekennzeichnet, dass** das erste Ventil (6) ein Betätigungsglied (6d, 6e) umfasst, mittels dessen es definiert geöffnet und geschlossen werden kann.

3. Hohlelement nach einem der vorhergehenden Ansprüche, **dadurch gekennzeichnet, dass** das erste Ventil (6) in dem zweiten Bereich (4), insbesondere in einem Wand-, Kanten- oder Eckbereich des Gehäuses (1), jenseits des ersten Bereiches angeordnet ist.

4. Hohlelement nach einem der vorhergehenden Ansprüche, **dadurch gekennzeichnet, dass** ein zweites Ventil zur Druckbefüllung des Hohlelements vorgesehen ist.

5. Hohlelement nach einem der vorhergehenden Ansprüche, **dadurch gekennzeichnet, dass** mindestens eines von dem ersten und dem zweiten Ventil mit einer gasdicht schließenden Verschlusskappe ausgeführt ist.

6. Vorrichtung zur Befüllung eines Hohlelements nach einem der vorhergehenden Ansprüche, umfassend ein Gefäß (7) zur Aufnahme von Arbeitsmittel und ein Verbindungsglied (8) zur lösbaren, gasdichten Verbindung des Gefäßes (7) mit dem ersten Ventil (6).

7. Vorrichtung zur Befüllung eines Hohlelements nach einem der vorhergehenden Ansprüche, umfassend ein Arbeitsmittelgefäß, das druckdicht an das erste Ventil als Füllventil anschließbar ist und mit Überdruck beaufschlagbar ist.

8. Verfahren zum Betrieb eines Hohlelements nach einem der Ansprüche 1 bis 5, **gekennzeichnet durch** die Schritte:
- Erhitzen zumindest eines Teils des Hohlelements, insbesondere des ersten Bereichs (2), um einen Anstieg eines Drucks des Arbeitsmittels über einen Außendruck zu erzielen;
- Öffnen des ersten Ventils (6) und/oder des zweiten Ventils, insbesondere durch den angestiegenen Druck des Arbeitsmittels;
- Abblasen einer insbesondere kontrollierten Menge des Arbeitsmittels durch das geöffnete erste Ventil (6) und/oder zweite Ventil.

9. Verfahren nach Anspruch 8, **dadurch gekennzeichnet, dass** das Erhitzen mittels eines gegenüber einem Normalbetrieb veränderten Betriebsmodus erfolgt, wobei insbesondere eine Wärmeabfuhr aus dem zweiten Bereich (4) unterbleibt oder stark reduziert ist.

10. Verfahren zum Betrieb eines Hohlelements nach einem der Ansprüche 1 bis 5, **gekennzeichnet durch** die Schritte:
- Erhitzen zumindest eines Teils des Hohlelements, insbesondere des ersten Bereichs (2), um einen Anstieg eines Drucks des Arbeitsmittels über den Kondensationsdruck zu erzielen;
- Öffnen des ersten Ventils (6) und/oder des zweite Ventils, insbesondere durch Absenkung des äußeren Drucks mittels einer Saug- oder Vakuumpumpe;
- Absaugen einer insbesondere kontrollierten Menge des Arbeitsmittels durch das geöffnete erste Ventil (6) und/oder zweite Ventil.

11. Verfahren nach einem der Ansprüche 8 bis 10, **dadurch gekennzeichnet, dass** das Verfahren in zeitlichen Abständen mehrfach ohne eine zwischenzeitige Befüllung des Hohlelements durchgeführt wird.

12. Verfahren zum Betrieb eines Hohlelements nach einem der Ansprüche 1 bis 5, **gekennzeichnet durch** die Schritte:
- Verbinden einer Vorrichtung nach Anspruch 6 oder 7 mit dem Hohlelement;
- Öffnen des ersten Ventils (6) und/oder des zweiten Ventils;
- Zuführen einer definierten Menge des Arbeitsmittels durch das erste Ventil (6) und/oder das zweite Ventil in das Hohlelement;
- Schließen des geöffneten Ventils.

13. Verfahren nach Anspruch 12, **dadurch gekennzeichnet, dass** vor dem Zuführen des Arbeitsmittels eine definierte Menge an Arbeitsmittel aus dem Hohlelement abgesaugt wird, insbesondere mittels einer Pumpe (12).

14. Verfahren nach Anspruch 13, **dadurch gekennzeichnet, dass** die nachfolgend zugeführte, definierte Menge an Arbeitsmittel in Abhängigkeit von einem an der Pumpe (12) anliegendem Saugdruck und mindestens einer Temperatur des Hohlelements bestimmt wird.

15. Verfahren nach einem der Ansprüche 12 bis 14, **gekennzeichnet durch** den Schritt:
- Zuführen einer so bemessenen Menge von Arbeitsmittel, dass das Sorptionsmittel (3) mit Arbeitsmittel gesättigt ist und das Aufnahmemittel (5) zumindest teilweise mit Arbeitsmittel gesättigt ist.

16. Verfahren nach einem der Ansprüche 12 bis 15, **gekennzeichnet, durch** den vorausgehenden Schritt:
- Erkennen eines Mangelzustands des Hohlelements, insbesondere aufgrund eines Anstiegs einer Wärmeträger-Austrittstemperatur während einer Verdampfungsphase des Hohlelements.

## Claims

1. A hollow element for a heat pump, comprising a closed hollow space with a first region (2), a second region (4) and a defined amount of a working means which can be shifted between the regions (2, 4), wherein a sorption means (3) for the adsorption and desorption of the working means is arranged in the first region (2) and wherein a capillary receiving means (5) for the condensation and evaporation of the working means is arranged in the second region (4), wherein at least one first valve (6) is provided on a housing (1) of the hollow element, by means of which working means can be repeatedly taken from the hollow space and/or introduced therein, **characterised in that** the first valve (6) is formed as a drain valve which opens from the hollow space to the outside at a defined differential pressure and wherein the first valve (6) automatically closes as a drain valve while there is a higher pressure in the hollow space than outside the first valve (6).

2. The hollow element according to claim 1, **characterised in that** the first valve (6) comprises an actuation element (6d, 6e) by means of which it can be opened and closed in a defined manner.

3. The hollow element according to one of the preceding claims, **characterised in that** the first valve (6) is arranged in the second region (4), in particular in a wall, edge or corner region of the housing (1) beyond the first region.

4. The hollow element according to one of the preceding claims, **characterised in that** a second valve for filling the hollow element with pressure is provided.

5. The hollow element according to one of the preceding claims, **characterised in that** at least one of the first and the second valve is designed with a closure cap which closes in a gas-tight manner.

6. A device for filling a hollow element according to one of the preceding claims, comprising a container (7) for receiving working means and a connection element (8) for the releasable, gas-tight connection of the container (7) to the first valve (6).

7. The device for filling a hollow element according to one of the preceding claims, comprising a working means container which can be connected to the first valve as a filling valve in a pressure-tight manner and which can be subjected to superatmospheric pressure.

8. A method for operating a hollow element according to one of claims 1 to 5, **characterised by** the steps:
- heating of at least a part of the hollow element, in particular of the first region (2), in order to achieve an increase of a pressure of the working means via an outer pressure;
- opening of the first valve (6) and/or of the second valve, in particular through the increased pressure of the working means;
- discharging of an in particular controlled amount of the working means via the opened first valve (6) and/or second valve.

9. The method according to claim 8, **characterised in that** the heating is by means of a changed operating mode compared to a normal operation, wherein in particular a heat dissipation from the second region (4) is prevented or is highly reduced.

10. The method for operating a hollow element according to one of claims 1 to 5, **characterised by** the steps:
- heating of at least a part of the hollow element, in particular of the first region (2), in order to achieve an increase of a pressure of the working means via the condensation pressure;
- opening of the first valve (6) and/or of the second valve, in particular by reducing the outer pressure by means of a suction or vacuum pump;
- extracting of an in particular controlled amount of the working means via the opened first valve (6) and/or second valve.

11. The method according to one of claims 8 to 10, **characterised in that** the method is performed several times at timed intervals without filling the hollow element in the meantime.

12. The method for operating a hollow element according to one of claims 1 to 5, **characterised by** the steps:
- connecting of a device according to claim 6 or 7 to the hollow element;
- opening of the first valve (6) and/or of the second valve;
- introducing of a defined amount of the working means into the hollow element via the first valve (6) and/or the second valve;
- closing of the opened valve.

13. The method according to claim 12, **characterised in that** a defined amount of working means is discharged from the hollow element, in particular by means of a pump (12), before introducing the working means.

14. The method according to claim 13, **characterised in that** the subsequently introduced, defined amount of working means is determined in dependence of a suction pressure of the pump (12) and at least a temperature of the hollow element.

15. The method according to one of claims 12 to 14, **characterised by** the step:
- introducing of an amount of working means measured in such a way that the sorption means (3) is saturated with working means and the receiving means (5) is at least partially saturated with working means.

16. The method according to one of claims 12 to 15, **characterised by** the preceding step:
- recognising of a fault condition of the hollow element, in particular due to an increase of a heat carrier outlet temperature during an evaporation phase of the hollow element.

## Revendications

1. Elément creux pour une pompe à chaleur, comprenant un espace creux fermé comportant une première zone (2), une deuxième zone (4) et une quantité définie d'un fluide de travail pouvant être déplacé entre les zones (2, 4), où un moyen de sorption (3) servant à l'adsorption et à la désorption du fluide de travail est disposé dans la première zone (2), et où un moyen de réception capillaire (5) servant à la condensation et à l'évaporation du fluide de travail est disposé dans la deuxième zone (4), où il est prévu, sur un boîtier (1) de l'élément creux, au moins une première vanne (6) au moyen de laquelle un fluide de travail peut, de manière répétée, être retiré de l'espace creux et / ou peut être introduit dans celui-ci, **caractérisé en ce que** la première vanne (6) est conçue comme une vanne de purge qui, à une pression différentielle définie, s'ouvre vers l'extérieur à partir de l'espace creux, et où la première vanne (6), en tant que vanne de purge, se ferme automatiquement, tandis qu'une pression supérieure à celle relevée à l'extérieur de la première vanne (6) s'applique dans l'espace creux.

2. Elément creux selon la revendication 1, **caractérisé en ce que** la première vanne (6) comprend un élément d'actionnement (6d, 6e) au moyen duquel ladite première vanne peut être ouverte et fermée de manière définie.

3. Elément creux selon l'une des revendications précédentes, **caractérisé en ce que** la première vanne (6) située dans la deuxième zone (4), en particulier dans une zone de paroi, de bordure ou de partie angulaire du boîtier (1), est disposée au-delà de la première zone.

4. Elément creux selon l'une quelconque des revendications précédentes, **caractérisé en ce qu'**il est prévu une deuxième vanne servant au remplissage sous pression de l'élément creux.

5. Elément creux selon l'une quelconque des revendications précédentes, **caractérisé en ce qu'**au moins l'une ou l'autre de la première et de la deuxième vanne est conçue en comportant un chapeau de fermeture fermant de manière étanche aux gaz.

6. Dispositif servant au remplissage d'un élément creux selon l'une quelconque des revendications précédentes, ledit dispositif comprenant un récipient (7) servant à la réception d'un fluide de travail, et comprenant un élément de liaison (8) servant à relier le récipient (7) à la première vanne (6), ladite liaison étant réalisée de manière amovible et étanche aux gaz.

7. Dispositif servant au remplissage d'un élément creux selon l'une quelconque des revendications précédentes, ledit dispositif comprenant un récipient d'un fluide de travail, récipient qui peut être raccordé, en conservant la pression, à la première vanne servant de vanne de remplissage, ledit récipient pouvant être soumis à une surpression.

8. Procédé de fonctionnement d'un élément creux selon l'une quelconque des revendications 1 à 5, **caractérisé par** les étapes consistant :
- à chauffer au moins une partie de l'élément creux, à chauffer en particulier la première zone (2), pour obtenir une augmentation d'une pression du fluide de travail, ladite pression étant supérieure à une pression extérieure ;
- à ouvrir la première vanne (6) et / ou la deuxième vanne, en particulier sous l'effet de la pression augmentée du fluide de travail ;
- à purger, en utilisant la première vanne ouverte (6) et / ou la deuxième vanne, une quantité - en particulier contrôlée - du fluide de travail.

9. Procédé selon la revendication 8, **caractérisé en ce que** le chauffage se produit au moyen d'un mode de fonctionnement modifié par rapport à un fonctionnement normal, où en particulier une dissipation de la chaleur, en provenance de la deuxième zone (4), ne se produit pas, ou bien est fortement réduite.

10. Procédé de fonctionnement d'un élément creux selon l'une quelconque des revendications 1 à 5, **caractérisé par** les étapes consistant :
- à chauffer au moins une partie de l'élément creux, à chauffer en particulier la première zone (2), pour obtenir une augmentation d'une pression du fluide de travail, ladite pression étant supérieure à la pression de condensation ;
- à ouvrir la première vanne (6) et / ou la deuxième vanne, en particulier en procédant à l'abaissement de la pression extérieure au moyen d'une pompe aspirante ou d'une pompe à vide ;
- à aspirer, en utilisant la première vanne ouverte (6) et / ou la deuxième vanne, une quantité - en particulier contrôlée - du fluide de travail.

11. Procédé selon l'une quelconque des revendications 8 à 10, **caractérisé en ce que** le procédé est exécuté plusieurs fois espacées par des intervalles de temps, sans qu'il soit procédé, entre-temps, à un remplissage de l'élément creux.

12. Procédé de fonctionnement d'un élément creux selon l'une quelconque des revendications 1 à 5, **caractérisé par** les étapes consistant :
- à relier un dispositif selon la revendication 6 ou 7 à l'élément creux ;
- à ouvrir la première vanne (6) et / ou la deuxième vanne ;
- à fournir à l'élément creux une quantité - définie - de fluide de travail, en utilisant la première vanne (6) et / ou la deuxième vanne ;
- à fermer la vanne ouverte.

13. Procédé selon la revendication 12, **caractérisé en ce que**, avant de fournir le fluide de travail, une quantité - définie - de fluide de travail est aspirée à partir de l'élément creux, en particulier au moyen d'une pompe (12).

14. Procédé selon la revendication 13, **caractérisé en ce que** la quantité - définie - de fluide de travail, fournie par la suite, est déterminée en fonction d'une pression d'aspiration s'appliquant à la pompe (12) et en fonction d'au moins une température de l'élément creux.

15. Procédé selon l'une quelconque des revendications 12 à 14, **caractérisé par** l'étape consistant :
- à fournir une quantité de fluide de travail, proportionnée de manière telle que le moyen de sorption (3) soit saturé avec du fluide de travail, et en ce que le moyen de réception (5) soit saturé au moins en partie avec du fluide de travail.

16. Procédé selon l'une quelconque des revendications 12 à 15, **caractérisé par** l'étape précédente consistant :
- à détecter un état défectueux de l'élément creux, en particulier en raison d'une augmentation d'une température de sortie d'un agent caloporteur, ladite augmentation se produisant au cours d'une phase d'évaporation de l'élément creux.
